# EUROPEAN PATENT APPLICATION

(11) **EP 4 437 845 A1**
(43) Date of publication of application: **02.10.2024**
(21) Application number: 24151975.0
(22) Date of filing: 15.01.2024
(51) Int. Cl.: A01K 89/01

(54) **LINE STOPPER DEVICE FOR FISHING SPINNING REEL**

(30) Priority: 27.03.2023 JP 2023050185
(71) Applicant: Globeride, Inc., Higashikurume-shi, Tokyo 203-8511 (JP)
(72) Inventor: TSUTSUMI, Wataru, Higashikurume-shi, 203-8511 (JP)
(74) Representative: Boult Wade Tennant LLP

(57) **Abstract**

A fishing gear of one embodiment of the present invention is a line stopper device (8) comprising a support member (10) that closes a through-hole (9) of a fishing spinning reel in which the through-hole penetrating in a radial direction is provided on a front side of a skirt portion (7) of a spool (3); and a line stopper member (20) supported by the support member. The line stopper member comprises a fishing line locking portion (21) supported by the support member on an outer side of the support member in the radial direction, and a support shaft portion (22) extending inward in the radial direction from the fishing line locking portion and penetrating through the support member. A width of the support member is formed to be larger than a width of the fishing line locking portion, and the fishing line locking portion is offset to one side with respect to the support member when viewed in a width direction.

## Description

### BACKGROUND OF THE INVENTION

### 1. TECHNICAL FIELD

The present invention relates to a line stopper device for a fishing spinning reel.

### 2. DESCRIPTION OF THE RELATED ART

Normally, a line stopper device for a fishing spinning reel is disposed on an outer peripheral surface of a skirt portion of a spool to prevent a fishing line wound around the spool from loosening. A line stopper member of such a line stopper device includes a support shaft portion extending outward in a radial direction from the outer peripheral surface of the skirt portion, and a fishing line locking portion provided at a distal end of the support shaft portion, and is configured such that the fishing line is locked by winding the fishing line around the support shaft portion or clamping the fishing line between the fishing line locking portion and the skirt portion.

### RELEVANT REFERENCES

### LIST OF RELEVANT PATENT LITERATURE

Patent Literature 1: Japanese Application Publication No. 2001-269094

### SUMMARY OF THE INVENTION

JP 2001-269094 A discloses a configuration of a spool for a spinning reel that is movable forward and rearward with respect to a reel body, and that includes a line winding drum portion having a tubular shape and having a fishing line wound around an outer periphery; a skirt portion provided at a rear end of the line winding drum portion and having a larger diameter than the line winding drum portion; and a fishing line locking portion that is provided inside an outer peripheral surface of the skirt portion, and that locks the fishing line using an elastic force from an inner peripheral side to an outer peripheral side of the skirt portion.

However, in JP 2001-269094 A, not only is there a possibility that foreign matter or the fishing line enters from a through-hole formed in the skirt portion, but it is also difficult to assemble a support member that is relatively small, which is a problem. In addition, in JP 2001-269094 A, it is difficult to accommodate the line stopping of various fishing lines with different line diameters, and line stopping becomes difficult depending on the line stopping mode, so that line curling occurs, which is another problem.

The present invention has been made in view of the above-described circumstances, and an object of the present invention is to provide a line stopper device for a fishing spinning reel that not only prevents the entry of foreign matter or a fishing line and improves the ease of assembling a support member by closing a through-hole while forming the through-hole, but also makes it difficult for line curling to occur while being able to easily and reliably perform a line stop. Other objects of the present invention will become apparent upon reference to the entirety of the present specification.

A line stopper device according to one embodiment of the present invention comprises a support member that closes a through-hole of a fishing spinning reel in which the through-hole penetrating in a radial direction is provided on a front side of a skirt portion of a spool; and a line stopper member supported by the support member. The line stopper member comprises a fishing line locking portion supported by the support member on an outer side of the support member in the radial direction, and a support shaft portion extending inward in the radial direction from the fishing line locking portion and penetrating through the support member. A width of the support member is formed to be larger than a width of the fishing line locking portion, and the fishing line locking portion is offset to one side with respect to the support member when viewed in a width direction.

In the line stopper device according to one embodiment of the present invention, the fishing line locking portion is offset in a right direction with respect to the support member when viewed in the radial direction of the skirt portion.

In the line stopper device according to one embodiment of the present invention, when viewed in the width direction, a gap that a fishing line enters is not provided between a side portion of the fishing line locking portion in a direction of the one side and a side portion of the support member in the direction of the one side.

In the line stopper device according to one embodiment of the present invention, when viewed in an up-down direction of the fishing line locking portion, a gap that a fishing line enters is not provided between a rear portion of the fishing line locking portion and a rear portion of the support member.

In the line stopper device according to one embodiment of the present invention, the fishing line locking portion is supported by the support member so as to cover a first portion of the support member on the outer side of the support member in the radial direction, and a width of the first portion has a length more than or equal to three times a width of a second portion of the support member not covered with the fishing line locking portion.

In the line stopper device according to one embodiment of the present invention, the second portion is a fishing line guide portion that guides a fishing line to the fishing line locking portion.

In the line stopper device according to one embodiment of the present invention, a length of the support member in a front-rear direction is the same as a length of the fishing line locking portion in the front-rear direction. In addition, in the line stopper device according to one embodiment of the present invention, a length of the support member in a front-rear direction is 5 mm or less.

In the line stopper device according to one embodiment of the present invention, a fishing line is locked by a protrusion provided on an inner surface of the fishing line locking portion and a recess provided on an outer surface of the support member to correspond to the protrusion.

In the line stopper device according to one embodiment of the present invention, the fishing line locking portion comprises a base portion to which the support shaft portion is connected, and a clamping portion extending from the base portion toward both sides in a circumferential direction, and a part of an inner surface of the clamping portion is supported by an outer surface of the support member.

A line stopper device according to one embodiment of the present invention is a line stopper device for a fishing spinning reel in which a through-hole penetrating in a radial direction is provided on a front side of a skirt portion of a spool and which comprises a support member closing the through-hole and supporting a line stopper member. An insertion port which is cut out toward a rear and through which the support member is insertable into the through-hole from a front of a rear flange of the spool is formed on a front surface of the rear flange. A guide restriction portion allowing a sliding movement of the support member and restricting a movement in the radial direction is formed at a facing portion between a peripheral edge portion of the through-hole and the support member. The through-hole is formed by cutting out a front portion of the skirt portion in a substantially C-shape when viewed in the radial direction, and a width on an insertion port side of the through-hole in a circumferential direction is formed to be wider than a width on a rear edge portion side of the through-hole in the circumferential direction. An outer shape of the support member is formed to correspond to the through-hole when viewed in the radial direction. An outer surface of the support member is a recessed surface recessed inward in the radial direction. The recessed surface is continuous to a front end of the support member. A width of the support member is formed to be larger than a width of the fishing line locking portion, and the fishing line locking portion is offset to one side with respect to the support member when viewed in a width direction.

In the line stopper device according to one embodiment of the present invention, the line stopper member comprises the fishing line locking portion disposed on the recessed surface, and a support shaft portion extending inward in the radial direction from the fishing line locking portion and penetrating through the support member. The fishing line locking portion comprises a base portion to which the support shaft portion is connected, and a clamping portion extending from the base portion toward both sides in the circumferential direction.

According to the above-described embodiment, it is possible to provide the line stopper device for a fishing spinning reel that not only prevents the entry of foreign matter or the fishing line and improves the ease of assembling the support member by closing the through-hole while forming the through-hole, but also makes it difficult for line curling to occur while being able to easily and reliably perform a line stop.

### BRIEF DESCRIPTION OF THE DRAWINGS

FIG. 1A is a side view illustrating an overall configuration of a fishing spinning reel according to one embodiment of the present invention, and FIG. 1B is a perspective view a range surrounded by dashed line IB in FIG. 1A when viewed obliquely from an upper left front side;
FIG. 2 is a view illustrating a basic structure of a line stopper device of the fishing spinning reel according to one embodiment of the present invention;
FIG. 3 is a plan view of the line stopper device of the fishing spinning reel according to one embodiment of the present invention when viewed from above;
FIG. 4 is a front view of the line stopper device of the fishing spinning reel according to one embodiment of the present invention when viewed from the front;
FIG. 5A is a plan view of the fishing spinning reel according to one embodiment of the present invention with a support member and the like removed from a skirt portion when viewed from above, and FIG. 5B is a plan view of the fishing spinning reel according to one embodiment of the present invention with only the support member attached to the skirt portion when viewed from above; and
FIG. 6A is a cross-sectional view of the line stopper device of the fishing spinning reel according to one embodiment of the present invention taken along line VIA-VIA in FIG. 3, and FIG. 6B is a cross-sectional view of the line stopper device of the fishing spinning reel according to one embodiment of the present invention taken along line VIB-VIB in FIG. 3.

### DETAILED DESCRIPTION

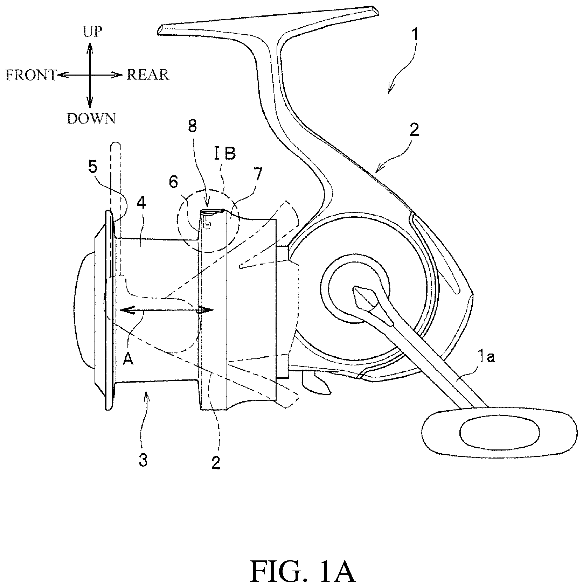

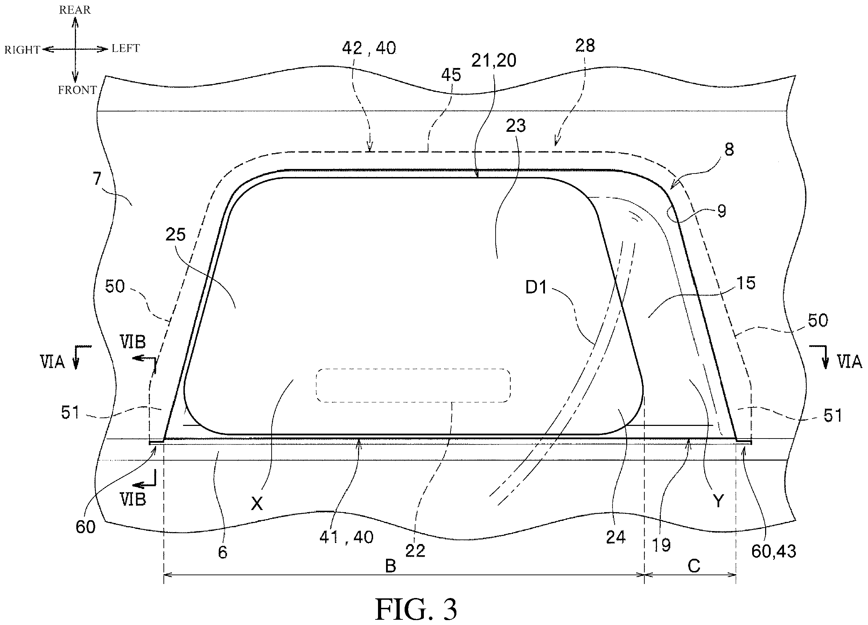

Hereinafter, one embodiment of a line stopper device of a fishing spinning reel according to one embodiment of the present invention will be specifically described with reference to the accompanying drawings. In the following description, "front and rear" and "up and down" referred to are defined based on directions illustrated in FIG. 1A, and "left and right" referred to is defined based on a direction illustrated in FIG. 3. Components that are common in a plurality of drawings are denoted by the same reference signs throughout the plurality of drawings. It should be noted that each drawing is not necessarily drawn to an accurate scale for convenience of description.

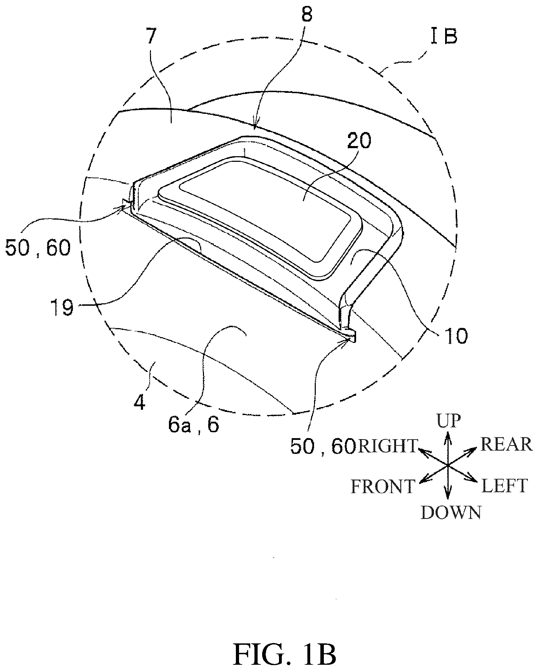

First, a basic configuration and a line stopper device 8 of a fishing spinning reel (fishing reel) 1 according to one embodiment of the present invention will be described with reference to FIGS. 1A and 1B. FIG. 1A is a side view illustrating an overall configuration of the fishing spinning reel according to one embodiment of the present invention, and FIG. 1B is a perspective view a range surrounded by dashed line IB in FIG. 1A when viewed obliquely from an upper left front side. As illustrated in FIG. 1A, the fishing spinning reel 1 comprises a reel body 2 to which a handle 1a is assembled; a rotor 2 that is rotated by a winding operation of the handle 1a; and a spool 3 that is reciprocated in a front-rear direction by a winding operation of the handle 1a.

The reel body 2 is provided with a spool shaft (not illustrated) extending forward and having the spool 3 attached to a front end, and a known oscillation mechanism (not illustrated). When a winding operation of the handle 1a is performed, the oscillation mechanism moves the spool shaft forward and rearward, and the spool 3 attached to the spool shaft moves forward and rearward (refer to an arrow A in FIG. 1A). In addition, a known drag mechanism (not illustrated) is interposed between the spool shaft and the spool 3, and when a force larger than or equal to a drag force acts on a fishing line, the spool 3 rotates (rotationally moves) around the spool shaft.

As illustrated in FIG. 1A, the spool 3 comprises a fishing line winding drum portion 4 having a cylindrical shape around which the fishing line is wound; a front flange 5 having a ring shape and rising outward in a radial direction from a front end of the fishing line winding drum portion 4; a rear flange 6 having a ring shape and rising outward in the radial direction from a rear end of the fishing line winding drum portion 4; and a skirt portion 7 having a substantially cylindrical shape and extending rearward from the rear flange 6. As illustrated in FIGS. 1A and 1B, the line stopper device 8 according to one embodiment of the present invention is provided on the front side and the upper side of an outer peripheral portion of the skirt portion 7. Since the line stopper device 8 is displaced in a circumferential direction to correspond to the rotational movement of the spool 3, the line stopper device 8 may be provided at other positions such as the lower side of the outer peripheral portion of the skirt portion 7. Hereinafter, for convenience of description of the line stopper device 8 according to one embodiment of the present invention, an example in which the line stopper device 8 is located on the upper side of the outer peripheral portion of the skirt portion 7 will be described.

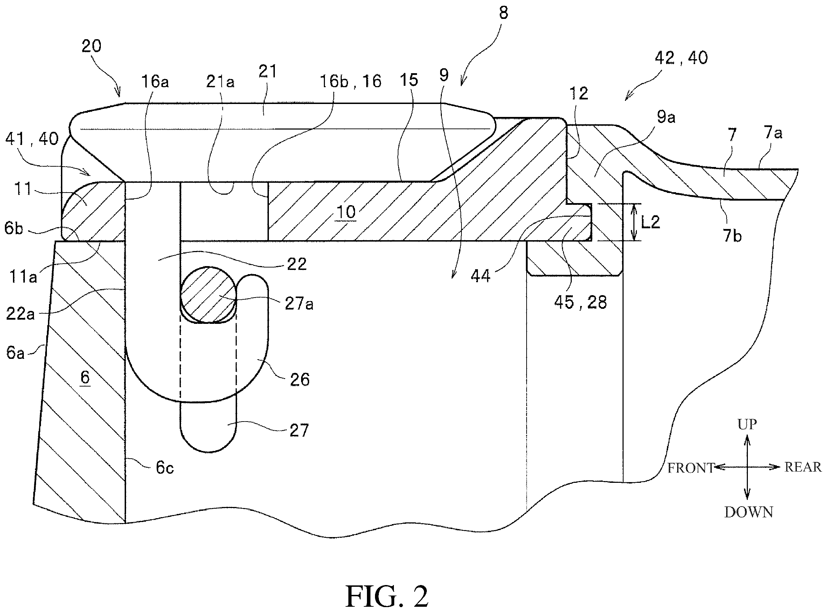

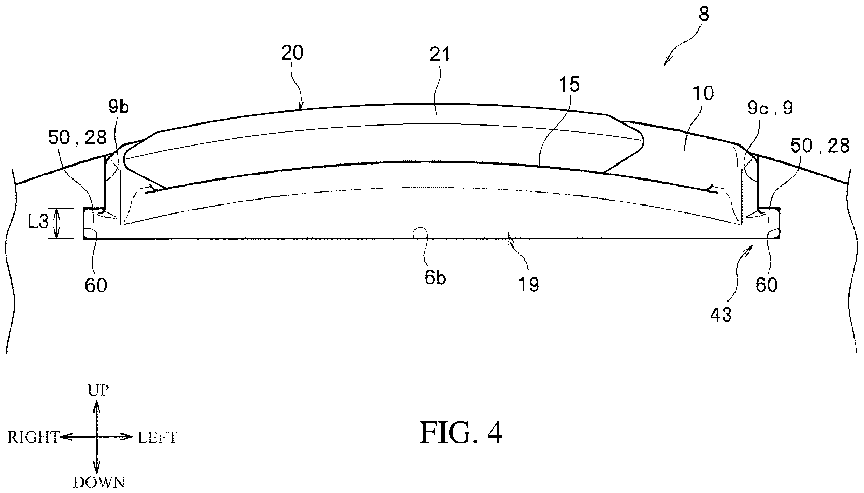

Next, the line stopper device 8 according to one embodiment of the present invention will be described with reference to FIGS. 2 to 4. As illustrated, the line stopper device 8 according to one embodiment of the present invention comprises a through-hole 9 penetrating through the skirt portion 7; a support member 10 that closes the through-hole 9; a line stopper member 20 on which a support shaft portion 22 penetrating through the front side of the support member 10 is formed; a spring member 27 that prevents the line stopper member 20 from being separated from the skirt portion 7; a restriction portion 40 that restricts the movement of the support member 10 in a penetrating direction (up-down direction) of the through-hole 9; a pair of rail portions 50 and 50 (refer to FIG. 4) formed in the support member 10; and a pair of engaging portions 60 and 60 (refer to FIG. 4) formed in the rear flange 6.

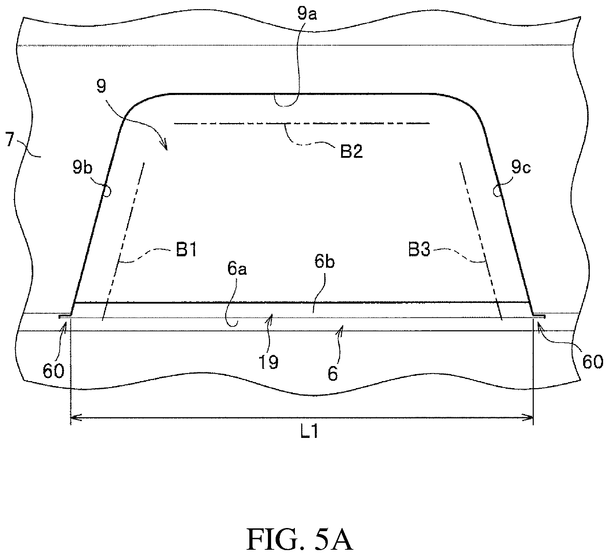

The through-hole 9 penetrates through the upper side of the outer peripheral portion of the skirt portion 7 in the radial direction, and the direction (penetrating direction) of the through-hole 9 is the up-down direction (radial direction of the skirt portion 7). As illustrated in FIG. 5A to be described later, the width of the through-hole 9 in a left-right direction (circumferential direction) gradually decreases toward the rear. Therefore, an opening of the through-hole 9 has a substantially trapezoidal shape.

Here, the through-hole 9 of the line stopper device 8 according to one embodiment of the present invention is formed by cutting a front portion of the skirt portion 7 having a cylindrical shape in a substantially C-shape (refer to dashed lines B1, B2, and B3) and removing the substantially C-shaped inner portion during manufacturing, and as illustrated in FIGS. 2 and 4, a peripheral edge portion of the through-hole 9 (cut end of the skirt portion 7) comprises a rear edge portion 9a extending in the left-right direction (circumferential direction) and forming a rear edge of the through-hole 9; a right edge portion 9b extending forward from a right end of the rear edge portion 9a and forming a right edge of the through-hole 9; and a left edge portion 9c extending forward from a left end of the rear edge portion 9a and forming a left edge of the through-hole 9.

In addition, when the through-hole 9 is formed, a part of the rear flange 6 is cut out since the cut is made from a front surface 6a of the rear flange 6 toward the skirt portion 7 on the rear side, as illustrated in FIGS. 3 and 4, an insertion port 19 through which the support member 10 can be assembled into the through-hole 9 by moving the support member 10 from the front to the rear of the rear flange 6 in a sliding manner is formed on the front surface 6a of the rear flange 6. In addition, a surface recessed inward in the radial direction from other portions (hereinafter, referred to as a contact surface 6b) is formed on an outer peripheral surface of the rear flange 6 (refer to FIG. 2). A width of the insertion port 19 in the left-right direction is widest in the width of the through-hole 9 in the left-right direction, and is set to L1 (refer to FIG. 5A).

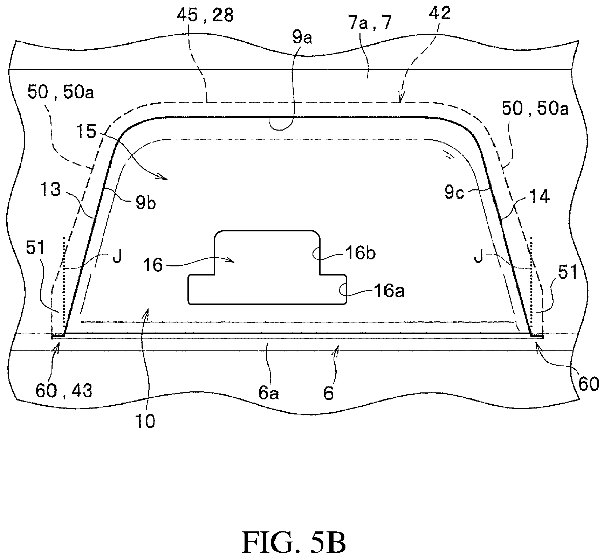

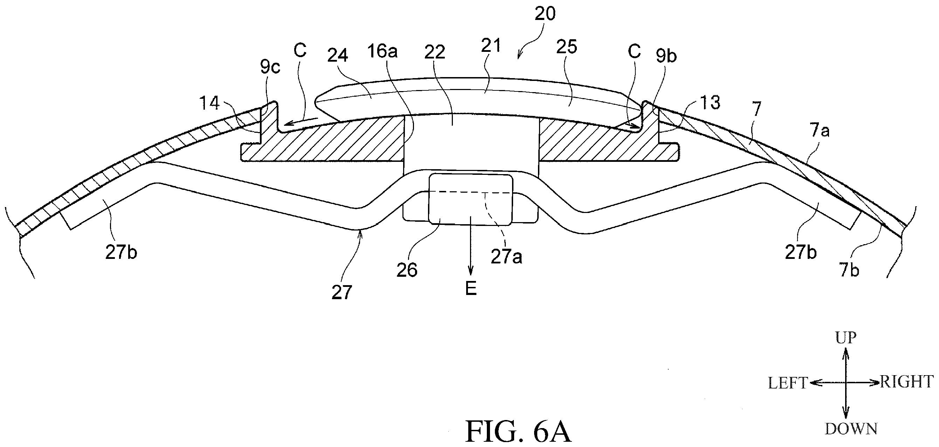

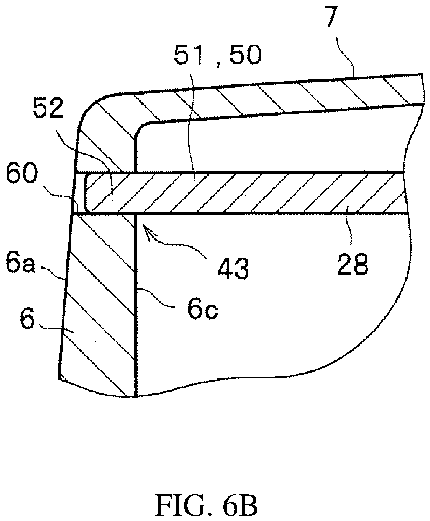

Next, the support member 10 of the line stopper device 8 according to one embodiment of the present invention will be described with reference to FIGS. 2 to 6. FIG. 5A is a plan view of the fishing spinning reel according to one embodiment of the present invention with the support member and the like removed from the skirt portion when viewed from above, and FIG. 5B is a plan view of the fishing spinning reel according to one embodiment of the present invention with only the support member attached to the skirt portion when viewed from above. FIG. 6A is a cross-sectional view of the line stopper device of the fishing spinning reel according to one embodiment of the present invention taken along line VIA-VIA in FIG. 3, and FIG. 6B is a cross-sectional view of the line stopper device of the fishing spinning reel according to one embodiment of the present invention taken along line VIB-VIB in FIG. 3.

The support member 10 of the line stopper device 8 according to one embodiment of the present invention is a resin member that supports the line stopper member 20 and that closes the through-hole 9, and is formed in a flat plate shape or a substantially flat plate shape. As illustrated in FIG. 5B, the outer shape of the support member 10 corresponds to the through-hole 9, and is formed in a substantially trapezoidal shape. A rear end surface 12 of the support member 10 is in contact with the rear edge portion 9a of the through-hole (refer to FIG. 2). A right end surface 13 of the support member 10 is in contact with the right edge portion 9b of the through-hole (refer to FIG. 6A). Further, a left end surface 14 of the support member 10 is in contact with the left edge portion 9c of the through-hole (refer to FIG. 6A). In this manner, a gap between the support member 10 and the peripheral edge portion of the through-hole 9 is sealed.

In addition, a width of the support member 10 in the left-right direction before the support member 10 is attached into the through-hole 9 is formed to be slightly larger than the width of the through-hole 9 in the left-right direction. Accordingly, the right end surface 13 and the left end surface 14 of the support member 10 are configured to be attached to the right edge portion 9b and the left edge portion 9c of the through-hole 9 in a pressure contact state, respectively (refer to an arrow C in FIG. 6A). In this manner, a gap is less to occur between each of the right end surface 13 and the left end surface 14 of the support member 10 and the peripheral edge portion (the right edge portion 9b and the left edge portion 9c) of the through-hole 9, and sealing performance can be improved.

As illustrated in FIG. 2, a lower surface 11a of a front portion 11 of the support member 10 is in contact with the contact surface 6b of the rear flange 6. Therefore, a gap between the support member 10 and the rear flange 6 is sealed. In addition, a central portion of an upper surface of the support member 10 is a recessed surface 15 recessed downward. For this reason, a fishing line locking portion 21 of the line stopper member 20 which will be described later is located further inward in the radial direction than when the recessed surface 15 is not formed. In addition, the recessed surface 15 is formed to a front end of the support member 10. For this reason, the fishing line wound around the fishing line winding drum portion 4 is easily routed onto the recessed surface 15.

In addition, as illustrated in FIG. 5B, a hole 16 having a substantially T-shape in a plan view is formed on the recessed surface 15. The hole 16 is a hole for inserting the support shaft portion 22 and the like when the line stopper member 20 is attached to the skirt portion 7. Here, in the hole 16, a hole located on the front side and having a longer length in the left-right direction is referred to as a front hole 16a, and a hole located on the rear side and having a shorter length in the left-right direction is referred to as a rear hole 16b. In addition, the support shaft portion 22 (refer to FIG. 2) of the line stopper member 20 is inserted into the front hole 16a, and a folded portion 26 (refer to FIG. 2) of the line stopper member 20 which will be described later is inserted into the rear hole 16b.

As illustrated in FIGS. 2, 3, 4, and 5B, a flange 28 protruding outward is formed on a peripheral end surface of the support member 10. The flange 28 is continuous over the rear end surface 12, the right end surface 13, and the left end surface 14 of the support member 10, and has a substantially C-shape when viewed in the radial direction. A thickness of the flange 28 in the up-down direction (radial direction) is set to L2 (refer to FIG. 2).

Next, the line stopper member 20 of the line stopper device 8 according to one embodiment of the present invention will be described with reference to FIGS. 2 and 3. As illustrated, the line stopper member 20 comprises the fishing line locking portion 21 disposed on the upper side (outer side in the radial direction) of the support member 10; the support shaft portion 22 extending downward (inward in the radial direction) from the fishing line locking portion 21; and the folded portion 26 having a substantially U-shape and folded upward from a lower end of the support shaft portion 22.

The fishing line locking portion 21 clamps the fishing line between the fishing line locking portion 21 and the recessed surface 15 of the support member 10, and a lower surface 21a of the fishing line locking portion 21 is in contact with the recessed surface 15. As illustrated in FIG. 3, the fishing line locking portion 21 has a rectangular shape in a plan view. The fishing line locking portion 21 comprises a base portion 23 to which the support shaft portion 22 is connected; a left clamping portion 24 extending leftward from the base portion 23; and a right clamping portion 25 extending rightward from the base portion 23, and is formed to be longer in the left-right direction than in the front-rear direction. Then, the fishing line can be clamped between the left clamping portion 24 and the recessed surface 15 (refer to D1 in FIG. 3).

The clamping portion (the left clamping portion 24 and the right clamping portion 25) extends in the left-right direction with respect to the base portion 23; however, a clamping portion of the related art extends rearward with respect to a base portion. For this reason, the length of the fishing line locking portion 21 in the front-rear direction is shorter than that of a fishing line locking portion of the related art. As a result, a length of the line stopper device 8 in the front-rear direction including the support member 10 is shorter than in the related art, and a length of the skirt portion 7 in the front-rear direction is also shorter than in the related art.

The line stopper device 8 according to one embodiment of the present invention comprises the support member 10 that closes the through-hole 9 of the fishing spinning reel 1 in which the through-hole 9 penetrating in the radial direction is provided on the front side of the skirt portion 7 of the spool 3, and the line stopper member 20 supported by the support member 10. The line stopper member 20 comprises the fishing line locking portion 21 supported by the support member 10 on the outer side of the support member 10 in the radial direction, and the support shaft portion 22 extending inward in the radial direction from the fishing line locking portion 21 and penetrating through the support member 10. The width (A) (in the left-right direction) of the support member 10 is formed to be larger than a width (B) (in the left-right direction) of the fishing line locking portion 21, and the fishing line locking portion 21 (center line of the fishing line locking portion 21 in the front-rear direction) is offset to one side from the center (center line in the front-rear direction) of the support member 10 with respect to the support member 10 when viewed in a width direction. As illustrated in FIGS. 1 to 4, in the line stopper device 8 according to one embodiment of the present invention, the fishing line locking portion 21 is offset in a right direction with respect to the support member 10 when viewed in the radial direction of the skirt portion 7. Namely, the fishing line locking portion 21 (center line of the fishing line locking portion 21 in the front-rear direction) is offset in the right direction from the center (center line in the front-rear direction) of the support member 10 with respect to the support member 10 when viewed in the width direction.

According to the line stopper device 8 of the fishing spinning reel 1 of one embodiment of the present invention, it is possible to provide the line stopper device that not only prevents the entry of foreign matter or the fishing line and improves the ease of assembling the support member by closing the through-hole while forming the through-hole, but also makes it difficult for line curling to occur while being able to easily and reliably perform a line stop. Specifically, since the line at a portion stopped by the line stop is less likely to be bent or crushed, the line can be used without cutting off the line at that portion.

In addition, as illustrated in FIGS. 1 and 3, the line stopper device 8 according to one embodiment of the present invention is configured such that when viewed in the width direction (left-right direction), a gap that the fishing line enters is not provided between a side portion of the fishing line locking portion 21 in the direction of the one side (in the example of FIGS. 1 and 2, the right side) and a side portion of the support member 10 in the direction of the one side (in the example of FIGS. 1 and 2, the right side). Namely, when viewed in the width direction (left-right direction), the side portion of the fishing line locking portion 21 in the direction of the one side (in the example of FIGS. 1 and 2, the right side) and the side portion of the support member 10 in the direction of the one side (in the example of FIGS. 1 and 2, the right side) are configured to come into contact with each other. In this manner, the direction in which the fishing line enters can be accurately limited.

In addition, as illustrated in FIGS. 1 to 3, the line stopper device 8 according to one embodiment of the present invention is configured such that when viewed in the front-rear direction of the fishing line locking portion 21, a gap that the fishing line enters is not provided between a rear portion of the fishing line locking portion 21 and a rear portion the support member 10. Namely, when viewed in the front-rear direction, the rear portion of the fishing line locking portion 21 and the rear portion of the support member 10 are configured to come into contact with each other. In this manner, the direction in which the fishing line enters can be accurately limited.

The line stopper device 8 according to one embodiment of the present invention is configured such that the fishing line locking portion 21 is supported by the support member 10 so as to cover a first portion X of the support member 10 on the outer side (upper side) of the support member 10 in the radial direction (up-down direction), and such that the width (B) of the first portion X has a length more than or equal to three times a width (C) of a second portion Y of the support member not covered with the fishing line locking portion. In this manner, the operation of stopping the line can be easily performed in the manner illustrated in the drawings by making a line stopping shape laterally long.

The line stopper device 8 according to one embodiment of the present invention is configured such that the second portion Y of the support member 10 is a fishing line guide portion 10a that guides the fishing line to the fishing line locking portion 21. In this manner, the line can be easily inserted when the line is stopped.

The line stopper device 8 according to one embodiment of the present invention is configured such that a length of the support member 10 in the front-rear direction is the same or substantially the same as the length of the fishing line locking portion 21 in the front-rear direction. In this manner, the line can be prevented from being pinched at that portion. In addition, the line stopper device 8 according to one embodiment of the present invention is configured such that the length of the support member 10 in the front-rear direction is 5 mm or less. In this manner, the line stopper that is compact and that has a sufficient function can be realized.

In the line stopper device 8 according to one embodiment of the present invention, the fishing line is locked by a protrusion provided on an inner surface of the fishing line locking portion 21 and a recess provided on an outer surface of the support member 10 to correspond to the protrusion. In addition, in the line stopper device 8 according to one embodiment of the present invention, the fishing line may be locked by a recess provided on the inner surface of the fishing line locking portion 21 and a protrusion provided on the outer surface of the support member 10 to correspond to the recess.

In the line stopper device 8 according to one embodiment of the present invention, the fishing line locking portion 21 comprises the base portion 23 to which the support shaft portion 22 is connected, and the clamping portion (the left clamping portion 24 and the right clamping portion 25) extending from the base portion 23 toward both sides in the circumferential direction, and a part of the inner surface of the clamping portion (the left clamping portion 24 and the right clamping portion 25) is supported by the outer surface of the support member 10.

As illustrated in FIG. 2, the support shaft portion 22 penetrates through the front hole 16a located on the front end side of the support member 10, and extends inside the skirt portion 7. A front surface 22a of the support shaft portion 22 is in contact with a rear surface 6c of the rear flange 6. Accordingly, the line stopper member 20 is restricted not to move forward.

In addition, as illustrated in FIG. 6A, the support shaft portion 22 is formed to be long in the left-right direction, and has a plate shape. In addition, a length of the support shaft portion 22 in the left-right direction is formed to be the same as that of the front hole 16a. Therefore, the support shaft portion 22 penetrating through the front hole 16a of the support member 10 does not move to the rear hole 16b (refer to FIG. 5B), in other words, the support member 10 does not move forward.

In addition, as illustrated in FIG. 6A, the spring member 27 is a wire member extending in the left-right direction and elastically deformable, and is deformed and assembled to bias a hook portion 26 of the support shaft portion 22 downward (inward in the radial direction). In more detail, the spring member 27 is assembled such that both ends 27b and 27b of the spring member 27 are in contact with an inner peripheral surface 7b of the skirt portion 7 and a central portion 27a of the spring member 27 is hooked on the folded portion 26, thereby constantly biasing the line stopper member 20 downward (refer to an arrow E). In this manner, the fishing line inserted between the left clamping portion 24 of the fishing line locking portion 21 and the recessed surface 15 of the support member 10 is strongly clamped by the elastic force of the spring member 27.

In addition, as illustrated in FIG. 3, the restriction portion 40 comprises a first restriction portion (guide restriction portion) 41 that restricts the movement of the front side of the support member 10 in the up-down direction that is the penetrating direction, and a second restriction portion (guide restriction portion) 42 that restricts the movement of the rear side of the support member 10 in the up-down direction. As illustrated in FIG. 2, the first restriction portion 41 is formed of the contact surface 6b of the rear flange 6 and the fishing line locking portion 21 of the line stopper member 20. The contact surface 6b is in contact with the lower surface 11a of the front portion 11 of the support member 10, and restricts the downward (inward in the radial direction) movement of the support member 10. The fishing line locking portion 21 is in contact with the front side of the upper surface (recessed surface 15) of the support member 10, and restricts the upward (outward in the radial direction) movement of the support member 10. In this manner, the front portion 11 of the support member 10 is restricted by the first restriction portion 41 so as not to move in the up-down direction (radial direction).

In addition, since the fishing line locking portion 21 is constantly biased downward (inward in the radial direction) by the spring member 27, the fishing line locking portion 21 is in downward contact with the front portion 11 of the support member 10. In this manner, the front portion 11 of the support member 10 is strongly clamped in the up-down direction by the contact surface 6b and the line stopper member 20. As a result, the fixing strength with which the support member 10 is fixed to the spool 3 is increased. In addition, since the fishing line locking portion 21 is in downward contact with the support member 10, a gap is less likely to occur between the support member 10 and the contact surface 6b, and sealing performance is increased.

The second restriction portion 42 is formed of a recess 44 formed in the skirt portion 7 and a protrusion 45 formed at a rear end of the support member 10. In the present embodiment, the recess 44 is formed by recessing a part of the rear edge portion 9a of the through-hole 9 rearward. The protrusion 45 is formed of a portion protruding rearward from the rear end surface 12 in the flange 28 of the support member 10. Then, the protrusion 45 is fitted into the recess 44, and the support member 10 and the skirt portion 7 are engaged with each other in the up-down direction. In this manner, the movement of the rear side of the support member 10 in the up-down direction (radial direction) is restricted by the second restriction portion 42. In addition, as illustrated in FIGS. 2 and 3, the recess 44 is formed along the left-right direction (circumferential direction) of the rear end surface 12. For this reason, it is difficult for foreign matter to pass between the rear end surface 12 of the support member 10 and the rear edge portion 9a of the through-hole 9, and sealing performance is increased.

In addition, as illustrated in FIG. 4, the pair of engaging portions 60 and 60 are recesses formed by partially cutting out left and right edge portions (rear flange 6) of the insertion port 19. A height (length in the radial direction) L3 of an internal space of the engaging portion 60 is the same as the thickness L2 of the flange 28 (refer to FIG. 2). In addition, as illustrated in FIG. 6B, the engaging portion 60 is formed from the front surface 6a to the rear surface 6c of the rear flange 6. For this reason, the internal space of the engaging portion 60 communicates with a front space of the rear flange 6 and an internal space of the skirt portion 7.

The pair of rail portions 50 and 50 are inserted into the pair of engaging portions 60 and 60 to guide the support member 10 into the through-hole 9 when the support member 10 is inserted into the insertion port 19 from the front of the insertion port 19. As illustrated in FIG. 5B, the pair of rail portions 50 and 50 are formed of a portion protruding rightward from the right end surface 13 and a portion protruding leftward from the left end surface 14 in the flange 28 of the support member 10. Outer edges 50a and 50a of the pair of rail portions 50 and 50 are inclined away from each other as the pair of rail portions 50 and 50 extend from the rear toward the front. In other words, the pair of rail portions 50 and 50 are widened in a tapered shape as the pair of rail portions 50 and 50 extend from the rear toward the front. In this manner, a portion of each rail portion 50 located outside the left and right edge portions of the insertion port 19 (hereinafter, the portion is referred to as a "front rail 51") is formed only on the front side of each rail portion 50 (refer to regions on the left and right sides outside auxiliary lines J).

As illustrated in FIG. 6B, a front end 52 of each rail portion 50 is disposed inside the engaging portion 60. Then, as described above, since the thickness of the rail portions 50 (the thickness L2 of the flange 28) and the height (length in the radial direction) L3 of the engaging portions 60 are formed to be the same, the rail portions 50 and the engaging portions 60 are engaged with each other. In this manner, the front portion 11 of the support member 10 is restricted not to move in the up-down direction (radial direction), and the fixing strength with which the support member 10 is fixed to the spool 3 is increased. A restriction portion formed of the rail portion 50 and the engaging portion 60 is referred to as a third restriction portion (guide restriction portion) 43.

Next, the assembly of the support member 10 will be described. First, in a first step, the support member 10 is disposed in front of the insertion port 19 of the rear flange 6, and the rear end (protrusion 45) of the support member 10 is directed toward the rear (insertion port 19). In a second step, the support member 10 is moved rearward in a sliding manner, and the rear end (protrusion 45) of the support member 10 is inserted into the insertion port 19. In a third step, a lower surface of the protrusion 45 of the support member 10 is brought into contact with the contact surface 6b of the rear flange 6. In a fourth step, the support member 10 continues to be moved rearward in a sliding manner, and the rear end surface 12 of the support member 10 is brought into contact with the rear edge portion 9a of the through-hole 9. In this manner, the protrusion 45 of the support member 10 is inserted into the recess 44 of the rear edge portion 9a of the through-hole 9, and the support member 10 is assembled into the through-hole 9. Here, by configuring the support member 10 so as to be moved rearward in a sliding manner while the lower surface of the support member 10 is in contact with (slides) the contact surface 6b, a downward (inward in the radial direction) misalignment is suppressed. As a result, the front rails 51 and 51 of the support member 10 are inserted into the engaging portions 60 in the process of continuing to move the support member 10 rearward in a sliding manner.

In addition, if the front rails 51 and 51 are inserted into the engaging portions 60, the misalignment of the support member 10 in the up-down direction (radial direction) can be suppressed when the support member 10 is moved rearward in a sliding manner. As a result, when the support member 10 continues to be moved rearward in a sliding manner, the protrusion 45 of the support member 10 is reliably inserted into the recess 44. In this manner, the support member 10 closes the through-hole 9, and sealing performance between the support member 10 and the peripheral edge portion of the through-hole 9 is high, so that foreign matter can be prevented from entering the skirt portion 7 (main body portion). In addition, the first restriction portion 41 is formed of the contact surface 6b and the line stopper member 20. The second restriction portion 42 and the third restriction portion 43 are formed of the recess 44, the engaging portion 60, the protrusion 45, and the rail portion 50. Therefore, the support member 10 can be fixed to the spool 3 with a simple structure. In addition, in work of assembling the support member 10, the posture of the support member 10 that is moved rearward in a sliding manner is held, and the protrusion 45 is reliably inserted into the recess 44. For this reason, the support member 10 can be easily assembled and assembly work efficiency can be improved.

In this manner, at least the first restriction portion 41 and the second restriction portion 42 or the third restriction portion (the pair of rail portions 50 and 50 and the pair of engaging portions 60 and 60) formed at a facing portion between the support member 10 and the peripheral edge portion of the through-hole 9 form the guide restriction portion that allows the sliding movement of the support member 10 and that restricts a movement in the radial direction.

The dimension, material, and disposition of each component described in the present specification are not limited to those explicitly described in the embodiment, and each component can be modified to have any dimension, material, and disposition that are within the scope of the present invention. In addition, components not explicitly described in the present specification can also be added to the described embodiment, or some of the components described in each embodiment can also be omitted.

### REFERENCE SIGNS LIST

- 1: Fishing spinning reel (fishing reel)
- 2: Reel body
- 3: Spool
- 4: Fishing line winding drum portion
- 5: Front flange
- 6: Rear flange
- 7: Skirt portion
- 8: Line stopper device
- 9: Through-hole
- 10: Support member
- 10a: Fishing line guide portion
- 19: Insertion port
- 20: Line stopper member
- 21: Fishing line locking portion
- 22: Support shaft portion
- 23: Base portion
- 24: Left clamping portion
- 25: Right clamping portion
- 28: Flange
- 40: Restriction portion
- 41: First restriction portion (guide restriction portion)
- 42: Second restriction portion (guide restriction portion)
- 43: Third restriction portion (guide restriction portion)
- 44: Recess
- 45: Protrusion
- 50: Rail portion
- 51: Front rail
- 60: Engaging portion

## Claims

1. A line stopper device comprising:
a support member that closes a through-hole of a fishing spinning reel in which the through-hole penetrating in a radial direction is provided on a front side of a skirt portion of a spool; and
a line stopper member supported by the support member,
wherein the line stopper member comprises a fishing line locking portion supported by the support member on an outer side of the support member in the radial direction, and a support shaft portion extending inward in the radial direction from the fishing line locking portion and penetrating through the support member, and
a width of the support member is formed to be larger than a width of the fishing line locking portion, and the fishing line locking portion is offset to one side with respect to the support member when viewed in a width direction.

2. The line stopper device according to claim 1, wherein the fishing line locking portion is offset in a right direction with respect to the support member when viewed in the radial direction of the skirt portion.

3. The line stopper device according to claim 1, wherein when viewed in the width direction, a gap that a fishing line enters is not provided between a side portion of the fishing line locking portion in a direction of the one side and a side portion of the support member in the direction of the one side.

4. The line stopper device according to claim 1, wherein when viewed in an up-down direction of the fishing line locking portion, a gap that a fishing line enters is not provided between a rear portion of the fishing line locking portion and a rear portion of the support member.

5. The line stopper device according to claim 1, wherein the fishing line locking portion is supported by the support member so as to cover a first portion of the support member on the outer side of the support member in the radial direction, and a width of the first portion has a length more than or equal to three times a width of a second portion of the support member not covered with the fishing line locking portion.

6. The line stopper device according to claim 5, wherein the second portion is a fishing line guide portion that guides a fishing line to the fishing line locking portion.

7. The line stopper device according to claim 1, wherein a length of the support member in a front-rear direction is the same as a length of the fishing line locking portion in the front-rear direction.

8. The line stopper device according to claim 1, wherein a length of the support member in a front-rear direction is 5 mm or less.

9. The line stopper device according to claim 1, wherein a fishing line is locked by a protrusion provided on an inner surface of the fishing line locking portion and a recess provided on an outer surface of the support member to correspond to the protrusion.

10. The line stopper device according to claim 1, wherein the fishing line locking portion comprises a base portion to which the support shaft portion is connected, and a clamping portion extending from the base portion toward both sides in a circumferential direction, and a part of an inner surface of the clamping portion is supported by an outer surface of the support member.

11. A line stopper device for a fishing spinning reel in which a through-hole penetrating in a radial direction is provided on a front side of a skirt portion of a spool and which comprises a support member closing the through-hole and supporting a line stopper member,
wherein an insertion port which is cut out toward a rear and through which the support member is insertable into the through-hole from a front of a rear flange of the spool is formed on a front surface of the rear flange,
a guide restriction portion allowing a sliding movement of the support member and restricting a movement in the radial direction is formed at a facing portion between a peripheral edge portion of the through-hole and the support member,
the through-hole is formed by cutting out a front portion of the skirt portion in a substantially C-shape when viewed in the radial direction, and a width on an insertion port side of the through-hole in a circumferential direction is formed to be wider than a width on a rear edge portion side of the through-hole in the circumferential direction,
an outer shape of the support member is formed to correspond to the through-hole when viewed in the radial direction,
an outer surface of the support member is a recessed surface recessed inward in the radial direction,
the recessed surface is continuous to a front end of the support member, and
a width of the support member is formed to be larger than a width of the fishing line locking portion, and the fishing line locking portion is offset to one side with respect to the support member when viewed in a width direction.

12. The line stopper device for a fishing spinning reel according to claim 11, wherein the line stopper member comprises the fishing line locking portion disposed on the recessed surface, and a support shaft portion extending inward in the radial direction from the fishing line locking portion and penetrating through the support member, and
the fishing line locking portion comprises a base portion to which the support shaft portion is connected, and a clamping portion extending from the base portion toward both sides in the circumferential direction.
